# EUROPEAN PATENT APPLICATION

(11) **EP 2 692 691 A1**
(43) Date of publication of application: **05.02.2014**
(21) Application number: 12305943.8
(22) Date of filing: 31.07.2012
(51) Int. Cl.: C01F 5/24

(54) **Magnesite and hydromagnesite preparation process**

(71) Applicant: Centre National de la Recherche Scientifique, 75794 Paris Cedex 16 (FR)
(72) Inventor: Montez Hernandez, German, 38470 Vinay (FR)
(74) Representative: Grosset-Fournier, Chantal Catherine

(57) **Abstract**

The present invention relates to the preparation of magnesite and hydromagnesite based on the carbonation of brucite with CO2 gas in an aqueous medium.

## Description

The present invention relates to a magnesite and hydromagnesite preparation process.

The formation and textural properties of natural mineral Mg-carbonates have been investigated for a very long time already. However, various questions remain still open concerning their formation in natural systems as well as concerning their production at the laboratory and industrial scale. In the last two decades, the precipitation of Mg-carbonates from Mg-rich solutions or Mg-rich suspensions has actively investigated in the perspective to store permanently the captured anthropogenic CO₂ via ex-situ mineral carbonation; i.e. the CO₂(gas)-to-carbonate(solid) transformation (Hanchen, M.; Prigiobbe, V.; Baciocchi, R.; Mazzotti, M. Chest. Eng. Sci. 2008, 63, 1012; Saldi, G. D.; Jordan, G.; Schott J.; Oelkers, E. H. Geochem. Cosmochem. Acta 2009, 73, 5646 ; Zhao, L.; Sang, L.; Chen, J.; Ji, J.; Teng H. H. Environ. Sci. Technol. 2010, 44, 406; Benezeth, P.; Saldi, G. D.; Dandurand, J.-L., Schott, J. Chem. Geol. 2011, 286, 21). Such carbonation reaction can therefore be part of a Carbon Dioxide Capture and Storage (CCS) system, which attempts to capture CO₂ from industrial sources and to store it permanently. In this way, the most successful implementation of the process of mineral carbonation involves the extraction of magnesium from natural olivine or serpentines and/or Mg-rich solid waste in aqueous solutions and subsequent precipitation of Mg-carbonate under a CO₂ atmosphere (IPCC (Intergovernmental Panel on Climate Change) Special Report on Carbon Dioxide Capture and Storage. Cambridge University Press, 2005, Cambridge, UK, New York.; O'Connor, W. K.; Dahlin, C. L.; Rush, G. E.; Gerdemann, S. J.; Penner, L. R.; Nilsen, D. N. Final report aqueous mineral carbonation: mineral availability, pretreatment, reaction parametrics, and process studies. Technical Report DOE/ARC-TR-04-002, 2005, Albany Research Center; Munz, I. A.; kihle, J.; Brandvoll, O.; Machenbach I.; Carey, J. W.; Haug, T. A.; Johansen, H., Eldrup, N. Energy Procedia 2009, 1, 4891; Lin, P.-C.; Huang, C.-W.; Hsiao, C.-T.; Teng, H. Environ. Sci. Technol. 2008, 42, 2748; Sun, Y.; Parikh, V.; Zhang, L. J. Hazard. Mater, 2012, 209-210, 458; Bobicki, E. R.; Liu, Q.; Xu, Z.; Zeng, H. Progress in Energy and Combustion Science 2012, 38, 302). Moreover, the reaction path for the MgO-H₂O-CO₂ slurry at ambient temperatures and at atmospheric CO₂ partial pressure is of both geological interest and practical significance. For example, the knowledge of the reaction path with this slurry would lead to a better understanding of the low temperature alteration or weathering of mafic and ultramafic rocks. On the other hand, exact knowledge of the reaction path in this slurry is important to the performance assessment of geological repositories for nuclear waste where mineral periclase MgO and brucite Mg(OH)₂ have been proposed as engineered barriers (Xiong, Y.; Lord, A. S. Appl. Geochem. 2008, 23, 1634).

Generally, in the MgO-H₂O-CO₂ or Mg(OH)₂-H₂O-CO₂ slurries a significant number of hydrated and basic (or hydroxylated) carbonates (e.g. nesquehontite, lansfordite, artinite, hydromagnesite, dypingite, pokrosvskite, etc.) can be formed at ambient temperature and at moderate CO₂ pressure (<55 bar) (Hanchen, M.; Prigiobbe, V.; Baciocchi, R.; Mazzotti, M. Chem. Eng. Sci. 2008, 63, 1012, Langmuir, D. The Journal of Geology 1965, 73, 730; Oh, K. D.; Morikawa, H.; Iwai, S.-I.; Aoki, H. American Mineralogist 1973, 58, 339; Hales, M. C.; Frost, R. L.; Martens, W. J. Raman Spectrosc. 2008, 39, 1141; Deelman, J. C. Neues Jahrbunch Für Mineralogy, Monatshefte 1999, 7, 289; Deelman, J. C. Notebooks on Geology 2003, Letter 2003/03 (CG2003_L03_JCD); Zhang, Z.; Zheng, Y.; Ni, Y.; Liu, Z., Chen, J.; Liang X. J. Phys. Chem. B 2006, 110, 12969; Sandengen, K.; Josang, L. O.; Kaasa, B. Ind. Eng. Chem. Res. 2008, 47, 1002 ; Pohl, M.; Rainer, C., Esser, M. *European Patent Application* **2011,** EP 2 322 581 A1 ; Fournier, J. Research Center, Richmond, Virginia 1992, Report 2022153401). All of which are considered as metastable compounds with respect to magnesite (anhydrous form: MgCO₃), which is the most stable Mg-carbonate compound. However, the precipitation of magnesite at low temperature is kinetically inhibited by a preferential precipitation of cited hydrated and/or hydroxylated Mg-carbonates, possibly due to high hydration character of Mg²⁺ ions in solution (Deelman, J. C. Chemise Der Erde-Geochemistry 2001, 61, 224). For this reason, the formation of magnesite at ambient temperature is virtually impossible (Hanchen, M.; Prigiobbe, V.; Baciocchi, R.; Mazzotti, M. Chest. Eng. Sci. 2008, 63, 1012). The minimal reported temperature for the production of magnesite is about 60-100°C, its formation also requiring the presence of elevated CO₂ pressure (Deelman, J. C. Chemie Der Erde-Geochemistry 2001, 61, 224 ; Usdowski, E. Naturwissenschaften 1989, 76, 374). In various cases, the magnesite is obtained by transformation of a pre-existent hydroxylated Mg-carbonate such as the hydromagnesite (Sandengen, K.; Josang, L. O.; Kaasa, B. Ind. Eng. Chem. Res. 2008, 47, 1002, Stevula, L.; Petrovic, J.; Kubranova, M. Chemicke Zvesti 1978, 32, 441). This transition can be very slow; for example, below 150°C and at moderate pressures, its duration is often in the order of days. Higher temperatures, high salinity, high CO₂ pressure, low magnesium concentration (in closed apparatus) and the use of organic additives (ex. monoethylene glycol) are known to accelerate the hydromagnesite-to-magnesite transformation (Sandengen, K.; Josang, L. O.; Kaasa, B. Ind. Eng. Chem. Res. 2008, 47, 1002; Zhang, L. Sandia National Laboratories, Albuquerque, USA 2000*,* Technical Report SAN099-19465). Reported transformation times are comprised between 2h at 200°C in a solution saturated with NaCl, and over 100 days at 110°C at lower salinity in a closed apparatus. Magnesite formation without an apparent initial or intermediate hydromagnesite presence has also been reported under high CO₂ pressures (100-150 bar) and at high temperatures (150-180°C), for experiments coupling the dissolution of Mg-silicates with carbonate precipitation (Giammar D. E.; Bruant Jr., R. G.; Peters, C. A. Chem. Geol. 2005, 217, 257, Bearat, H.; Mckelvy, M. J.; Chizmeshya, A. V. G.; Gormley, D., Nunez, R.; Carpenter, R. W., Squires, K.; Wolf, G. H. Environ. Sci. Technol. 2006, 40, 4802; Wolf, G. H.; Chizmeshya, A. V. G.; Diefenbacher, J.; Mckelvy, M. J. Environ. Sci. Technol. 2004, 38, 932; O'Connor, W. K., Dahlin, D. C.; Rush, G. E.; Dahlin, C. L.; Collins, W, K. Mineral & Matallurgical Processing 2002, 19, 95). The requirements of high temperatures and high CO₂ pressures to precipitate the magnesite have limited its production at industrial scale. Moreover, the magnesite applications as filler and pigment in paper, paint rubber and plastics can be sometimes replaced by synthetic calcite that can be produced in a wide panel of lower temperatures and CO₂ pressures (Montes-Hernandez, G.; Renard, F.; Geffroy, N.; Charlet, L.; Pironon, J. J. Cryst. Growth 2007, 308, 228; Montes-Hernandez, G.; Fernandez-Martinez, A.; Renard, F. Cryst. Growth Des. 2009, 9, 4567; Montes-Hernandez, G.; Daval, D.; Chiriac, R.; Renard, F. Cryst. Growth Des. 2010, 10, 4823). Searching novel and/or innovative synthesis methods for magnesite at low temperature and low CO₂ pressure remains still an important scientific challenge to provide a better understanding on its formation in natural systems and to facilitate its production at industrial scale.

One of the aims of the present invention is to provide a simple method of carbonation of brucite for the preparation hydromagnesite and magnesite.

Another aim of the invention is to provide a preparation process of magnesite and hydromagnesite in two steps at low temperature and low CO₂ pressure.

The present invention relates to the use of brucite and a CO₂ source in a medium having a pH higher than 13, in particular 13.5,
and containing a strong base, at a temperature comprised from about 15°C to about 40°C, in particular from about 16°C to about 20°C, during a t₁ time comprised from about 2h to about 25h, for the preparation of magnesite and/or hydromagnesite.

The inventors have surprisingly found that the strong alkalinity of the medium accelerate the brucite carbonation by increasing the concentration of carbonate ions.

In particular a strong base such as NaOH increases the trapping of CO₂ forming Na₂CO₃ which is spontaneously dissociated into Na⁺ and CO₃⁻, that is to say a fast availability and a high concentration of carbonate ions that will react with brucite.

The brucite has the following formula: Mg(OH)₂.and can be from synthetic or natural origin.

Advantageously, brucite is from synthetic origin and can be prepared by methods well known from a man skilled in the art.

The CO₂ source can be pure or concentrated CO₂ gas, i.e. CO₂ gas containing a small proportion of SOₓ or NOₓ, or a stream containing a low concentration of CO₂ gas such as flue gas or industrial off-gas or a mixture of CO₂ gas with an inert gas such as, for example, nitrogen, argon or air.

The reaction of brucite with CO₂ is named a carbonation reaction.

The medium containing brucite and CO₂ must be highly alkaline, i.e. higher than 13, in particular 13.5.

By "medium" is meant an aqueous medium, in particular water, advantageously high-purity water.

Thus the medium contains slurry of brucite-H₂O-CO₂ and the strong base.

By "strong base" is meant a base giving a pH of the medium higher than 13, in particular 13.5.

The temperature of the medium is comprised from about 15°C to about 40°C, in particular it is the room temperature, i.e. from 16° to 20°C.

Above 40°C, the reaction medium necessitates to be heated to reach the temperature which is expensive for a production at industrial scale.

It must be noted that the introduction of NaOH in an aqueous medium is an exothermic reaction and thus an initial temperature (tᵢ) of about 26°C is observed in the medium before introducing CO₂.

After the CO₂ introduction, a reaction between CO₂ and the base, such as NaOH, takes place to form Na₂CO₃ that reacts with brucite and thus the temperature rises again to 37°C ± 1 °C until about 3h. Then, the temperature slowly decreased to ambient (room) temperature, i.e. about 16°C to 20°C.

The magnesite and hydromagnesite have the respective following formulae: Mg(CO₃) and Mg₅(CO₃)₄(OH)₂.4H₂O.

The carbonation reaction must be carried out at a controlled time between 2h to 25h depending of the final required product (magnesite or hydromagnesite).

Below 2h, the time is short to obtain either magnesite or hydromagnesite in good yield. Above 25h, the time becomes too expensive in an industrial view.

In an advantageous embodiment, the present invention relates to the use of brucite and a CO₂ source in a medium having a pH higher than 13, in particular 13.5, as defined above, wherein said base is selected from the group consisting of NaOH, KOH, LiOH and RbOH, preferentially NaOH, preferably at a molar ratio NaOH/brucite comprised from 1 to 3, in particular 2.

The base plays a catalytic role by accelerating the brucite carbonation as already stated above.

The number of molar equivalents of the base must be at least the one of brucite but no more than 3. Above 3, the molar concentration of the base does not improve the speed of the reaction or the yield of magnesite of hydromagnesite obtained.

Advantageously, 2 eq of base are used.

Advantageously, the base is NaOH because of its availability and is preferentially 2M NaOH.

In an advantageous embodiment, the present invention relates to the use of brucite and a CO₂ source in a medium having a pH higher than 13, in particular 13.5, as defined above, wherein the CO₂ source in the medium is at a initial pressure comprised from about 40bar to about 60bar, in particular 50bar.

By "initial pressure" is meant the pressure of the CO₂ source when it is introduced into the alkaline medium.

The pressure used for the carbonation reaction is an anisobaric pressure that means that the pressure is not constant during the carbonation reaction, i.e. variable between the beginning and the end of the process. As the CO₂ source is consumed, CO₂ pressure drops in the system, i.e. the apparatus containing the reaction medium.

Alternatively, an isobaric pressure can be used, i.e. at a constant CO₂ pressure during the reaction, by introducing CO₂ as soon as it is consumed.

Below 40bar, the pressure is too low to obtain a good rate of carbonation reaction.

Above 60bar, the pressure becomes too high to be interesting in view of the cost for a production at industrial scale.

In an advantageous embodiment, the present invention relates to the use of brucite and a CO₂ source in a medium having a pH higher than 13, in particular 13.5, the CO₂ source in the medium being at a initial pressure comprised from about 40bar to about 60bar, in particular 50bar, as defined above, wherein said t₁ time is comprised from 23h to about 25h, in particular 24h, enabling the formation of an intermediate comprising a dypingite precipitate in the medium.

The inventors have surprisingly found that the control of the t₁ time allows to monitor the intermediates formed in the reaction, a t₁ time comprised from 23 to 25h, in particular 24h, allowing to form a precipitate of dypingite, the structure of which is the following: *(Mg₅(CO₃)₄(OH)₂.5H₂O).* Said dypingite is under the form of platy-compacted aggregates.

Thus, a suspension of dypingite is obtained in the medium.

In an advantageous embodiment, the present invention relates to the use of brucite and a CO₂ source in a medium having a pH higher than 13, in particular 13.5, the CO₂ source in the medium being at a initial pressure comprised from about 40bar to about 60bar, in particular 50bar, said t₁ time being comprised from 23h to about 25h, in particular 24h, enabling the formation of an intermediate comprising a dypingite precipitate in the medium, as defined above, wherein said medium containing the dypingite is further heated, after said t₁ time, at a temperature comprised from about 80°C to about 100°C, in particular 90°C, during a t₂ time comprised from about 20 to about 30 h, in particular 24h, for the preparation of magnesite, comprising less than 2% of eitelite.

The inventors have surprisingly found that heating the dypingite precipitate at about 80°C to about 100°C, in particular 90°C during about 20 to about 30 h, in particular 24h, leads to the precipitation of the magnesite in the medium.

This heating step is named heat-ageing step.

Below 20h, the transformation of dypingite into magnesite is not complete. Above 30h, further heating does not improve the yield, as the reaction is already complete.

Thus, in a complete time of 48h, magnesite can be formed from brucite if the medium contains a strong base such as NaOH, KOH, LiOH and RbOH, in particular NaOH.

The magnesite obtained is constituted of rhombohedral single crystals (<2µm) of magnesite, eventually comprising eitelite that is a marker of the process of the invention in a proportion less than 2% by weight compared with magnesite.

In an advantageous embodiment, the present invention relates to the use of brucite and a CO₂ source in a medium having a pH higher than 13, in particular 13.5, the CO₂ source in the medium being at a initial pressure comprised from about 40bar to about 60bar, in particular 50bar, as defined above, wherein said t₁ time is comprised from 2h to about 4h, in particular 3h, enabling the formation of an intermediate comprising a mixture of residual brucite and a hydrated Mg carbonate in the medium.

The inventors have surprisingly found that the control of the t₁ time allows to control the intermediates formed in the reaction, a t₁ time comprised from 2 to 4h, in particular 3h, allowing to form an intermediate comprising a mixture of the optionally residual brucite and a hydrated Mg carbonate.

The expression "residual brucite" means that a small quantity of brucite that has not yet reacted can be present in the medium that will be further transformed into hydromagnesite during the heat-ageing step.

By "hydrated Mg carbonate" is meant a mixture of compounds of the dypingite type, i.e. of various mineral phases.
and/or an amorphous hydrated Mg carbonate that forms a suspension in the medium.

As already stated, the dissolution of NaOH in water is exothermic.

Then, the reaction of NaOH with CO₂ forms Na₂CO₃ that further reacts with brucite.

These two last coupled reactions are exothermic, the maximum of the suspension temperature reaching 37±1°C after about 3h of reaction.

Thus, the introduction of brucite and the strong base is carried out at room temperature and thus an initial temperature (tᵢ) of about 26°C is observed in the medium before introducing CO₂, said medium reaching 37±1°C until the complete or almost complete formation of said intermediate.

In an advantageous embodiment, the present invention relates to the use of brucite and a CO₂ source in a medium having a pH higher than 13, in particular 13.5, the CO₂ source in the medium being at a initial pressure comprised from about 40bar to about 60bar, in particular 50bar, said t₁ time being comprised from 2h to about 4h, in particular 3h, enabling the formation of an intermediate comprising a mixture of residual brucite and of hydrated Mg carbonate in the medium, as defined above, wherein said medium is further heated, after said t₁ time, at a temperature comprised from about 80°C to about 100°C, in particular 90°C during a t₂ time comprised from about 1 to about 3h, in particular 2h, for the preparation of hydromagnesite, comprising less than 2% of brucite.

The inventors have surprisingly found that heating the mixture of residual brucite and of hydrated Mg carbonate at about 80°C to about 100°C, in particular 90°C, during a t₂ time comprised from about 1 to about 3h, in particular 2h, leads to the precipitation of the hydromagnesite in the medium.

Hydromagnesite is obtained under a precipitate form and has the following structure: *Mg₅(CO₃)₄(OH)₂.4H₂O.*

It is obtained under the form of platy fine particles with a moderate specific surface area (28 m²/g), eventually comprising brucite that is a marker of the process of the invention in a proportion less than 2% by weight compared with hydromagnesite.

This heating step is named heat-ageing step.

Below 1h, the transformation of the mixture of residual brucite and of hydrated Mg carbonate into hydromagnesite is not complete. Above 3h, further heating is not necessary as the reaction is already complete.

Thus, in a complete time of 5h, hydromagnesite can be formed from brucite if the medium contains a strong base such as NaOH, KOH, LiOH and RbOH, in particular NaOH.

In another aspect, the present invention relates to a process of preparation of magnesite and/or hydromagnesite comprising a step of contacting brucite and a CO₂ source in a medium having a pH higher than 13, in particular 13.5, and containing a strong base, at a temperature comprised from about 15°C to about 40°C, in particular from about 16°C to about 20°C, during a t₁ time comprised from about 2h to about 25h.

In an advantageous embodiment, the step of contacting brucite and a CO₂ source in a medium having a pH higher than 13, in particular 13.5, and containing a strong base is carried out at 16°C.

In an advantageous embodiment, the step of contacting brucite and a CO₂ source in a medium having a pH higher than 13, in particular 13.5, and containing a strong base is carried out at 17°C.

In an advantageous embodiment, the step of contacting brucite and a CO₂ source in a medium having a pH higher than 13, in particular 13.5, and containing a strong base is carried out at 18°C.

In an advantageous embodiment, the step of contacting brucite and a CO₂ source in a medium having a pH higher than 13, in particular 13.5, and containing a strong base is carried out at 19°C.

In an advantageous embodiment, the step of contacting brucite and a CO₂ source in a medium having a pH higher than 13, in particular 13.5, and containing a strong base is carried out at 20°C.

In an advantageous embodiment, the present invention relates to a process of preparation of magnesite and/or hydromagnesite, as defined above, wherein said base is NaOH, preferably at a molar ratio NaOH/brucite comprised from 1 to 3, in particular 2.

In an advantageous embodiment, the present invention relates to a process of preparation of magnesite and/or hydromagnesite, as defined above, wherein the CO₂ source in the medium is at an initial pressure comprised from about 40 bar to about 60 bar, in particular 50 bar.

By "initial pressure" is meant the pressure of the CO₂ source when it is introduced into the alkaline medium.

The pressure used for the carbonation reaction is an anisobaric pressure that means that the pressure is not constant during the carbonation reaction, i.e. variable between the beginning and the end of the process. As the CO₂ source is consumed, CO₂ pressure drops in the system, i.e. the apparatus containing the reaction medium.

Alternatively, an isobaric pressure can be used, i.e. at a constant CO₂ pressure during the reaction, by introducing CO₂ as soon as it is consumed.

Below 40bar, the pressure is too low to obtain a good rate of carbonation reaction.

Above 60bar, the pressure becomes too high for a production of magnesite and/or hydromagnesite at an industrial scale.

In an advantageous embodiment, the present invention relates to a process of preparation of magnesite and/or hydromagnesite, wherein the CO₂ source in the medium is at an initial pressure comprised from about 40 bar to about 60 bar, in particular 50bar, as defined above, wherein said t₁ time is comprised from 23h to about 25h, in particular 24h, to obtain an intermediate comprising a dypingite precipitate in the medium.

The strong base, in particular NaOH, plays a catalytic role, i.e. it accelerates the brucite carbonation by a temporary increase of carbonate ion concentration

In an advantageous embodiment, the present invention relates to a process of preparation of magnesite and/or hydromagnesite, wherein the CO₂ source in the medium is at an initial pressure comprised from about 40 bar to about 60 bar, in particular 50bar, wherein said t₁ time is comprised from 23h to about 25h, in particular 24h, to obtain an intermediate comprising a dypingite precipitate in the medium, as defined above, comprising a further step of heating the medium containing the dypingite, after said t₁ time, at a temperature comprised from about 80°C to about 100°C, in particular 90°C, during a t₂ time comprised from about 20 to about 30 h, in particular 24h to obtain magnesite.

The strong base, in particular NaOH, not only plays a catalytic role but also favors the magnesite formation during the heat-ageing step.

In an advantageous embodiment, the present invention relates to one of the above process of preparation of magnesite comprising the following steps:
a. contacting brucite and a CO₂ source in a medium having a pH higher than 13, in particular 13.5, and containing a strong base, in particular NaOH, at a temperature comprised from about 15°C to about 40°C, in particular from about 16°C to about 20°C, during a t₁ time comprised from 23h to about 25h, in particular 24h, to obtain an intermediate comprising a dypingite precipitate in the medium,
b. optionally filtration of the medium containing the dypingite precipitate to obtain an isolated dypingite precipitate,
c. heating said medium containing the dypingite precipitate, or said isolated dypingite precipitate after introducing it in a medium having a pH higher than 13, in particular 13.5, and containing a base, at a temperature comprised from about 80°C to about 100°C, in particular 90°C during a t₂ time comprised from about 20 to about 30 h, in particular 24h to obtain a magnesite precipitate.

The precipitation of magnesite at low temperature is kinetically inhibited by a preferential precipitation of hydrated and/or hydroxylated Mg-carbonates (e.g. nesquehontite, lansfordite, artinite, hydromagnesite, dypingite, pokrosvskite...), possibly due to high hydration character of Mg²⁺ ions in solution. Based on this assumption, the formation of magnesite at ambient temperature is virtually impossible.

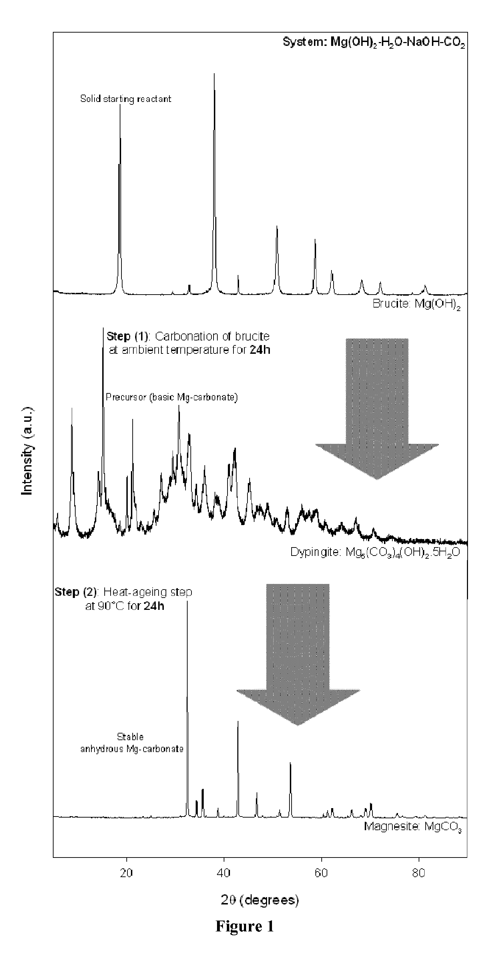

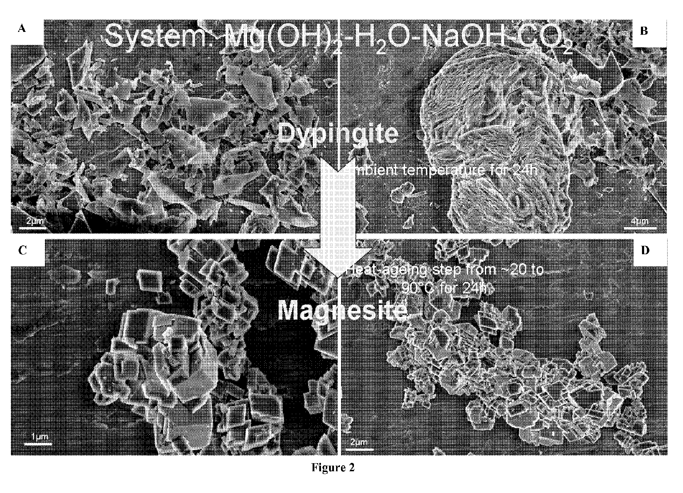

In the present invention, a simple and novel synthesis route for rhombohedral single crystals (<2µm) of magnesite is described. The precipitation process requires only 48h and it is summarized by two main sequential steps (see Fig. 1):
In step a. aqueous carbonation of synthetic brucite (Mg(OH)₂) was done by injection of CO₂ in high alkaline medium (2Molal of NaOH) at ambient temperature (∼20°C). This physicochemical step led to precipitation of platy-compacted aggregates of dypingite: *Mg₅(CO₃)₄(OH)₂.5H₂O* after 24h of fluid-solid interaction as attested by XRD and FESEM on the solid (see Fig. 1 and 2). Moreover, moderate specific surface area (9 m²/g) was deduced from the N₂ adsorption isotherm (Table 2).

Assuming that the CO₂ absorption in high alkaline solution of NaOH is faster and higher than in water via the following exothermic reaction:

2*NaOH* + *CO*_{2(*aq*)} → *Na*₂*CO*₃ + *H*₂*O* (1)

the carbonation of brucite leading to precipitation of dypingite can be written as follows:

*Mg*(*OH*)₂ + 0.8*Na*₂*CO*₃ + *H*₂*O* → 0.2*Mg*₅(*CO*₃)₄(*OH*)₂.5*H*₂*O* + 1.6*NaOH* (2)

These two reactions (1) and (2) take place at ambient temperature (∼20°C) during the first 24 hours. However, as observed in the experiments, these reactions are exothermic, the maximum of the suspension temperature reaching 37±1°C after about 3h of reaction. Then, the temperature slowly decreased to ambient temperature (∼20°C).

Therefore, the 3h of reaction wherein said temperature reaches 37±1°C are comprised in the t₁ time.

In step c., a heat-ageing step from 20 to 90°C is performed to obtain complete transformation of dypingite to magnesite after 24 hours. Herein, a solid state transition implying the simultaneous dehydration and carbonation of brucitic layer of dypingite precursor coupled with instantaneous formation of magnesite crystals are assumed. The global reaction for dypingite-to-magnesite transformation can be written as follows:

0.2*Mg*₅(*CO*₃)₄(*OH*)_{2.}5*H*₂*O* + 0.2*Na*₂*CO*₃ → *MgCO*₃ + 0.4*NaOH* + *H*₂*O* (3)

NaOH played a catalytic role, i.e. it accelerated the brucite carbonation by a temporary increase of carbonate ion concentration. The catalytic role can be verified by the reaction balance of reactions 1 to 3. The presence of NaOH also favored the magnesite formation during the heat-ageing step.

In this way, the precipitation of magnesite enhanced by NaOH and a heat-ageing step can be illustrated by the following global carbonation reaction:

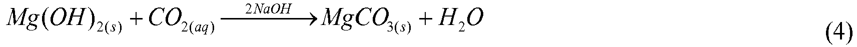

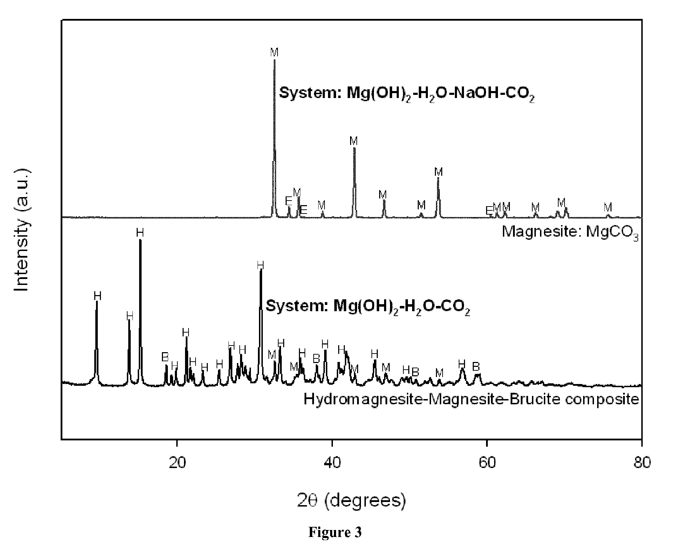

This reaction takes place exclusively when NaOH is used as catalytic agent. Conversely, if the same experiment is carried out in absence of NaOH, incomplete carbonation of brucite is observed and the hydromagnesite is the dominant Mg-carbonate after the heat-ageing step. In this case, the obtained hydromagnesite-magnesite-brucite composite contains only about 5% of magnesite (see Fig. 3).

In step b., dypingite is optionally filtered. That means that when dypingite is filtered, step c. must be carried out in an aqueous medium containing a strong base, such as NaOH, KOH, LiOH and RbOH, in particular NaOH, in order to reach a pH higher than 13, in particular 13.5.

The purity of the obtained magnesite is > 96% based on the thermogravimetric analysis (TGA)

On the other hand, the yield or efficiency is close to 1 (or 100%), based in the absence on brucite in the product.

While NaOH has a catalytic role in the reaction, the final pH is 8.9, because CO₂ is in excess compared with NaOH and thus is trapped according to the above reaction (1) to give Na₂CO₃.

In an advantageous embodiment, the present invention relates to a process of preparation of magnesite and/or hydromagnesite, wherein the CO₂ source in the medium is at an initial pressure comprised from about 40 bar to about 60 bar, in particular 50bar, as defined above, wherein said t₁ time is comprised from 2h to about 4h, in particular 3h, to obtain an intermediate comprising a mixture of residual brucite and a hydrated Mg carbonate in the medium.

The reaction of NaOH with CO₂ forms Na₂CO₃ that reacts further with brucite, both reactions being exothermic, the maximum of the temperature reaching 37±1°C after about 3h of reaction.

Thus, the introduction of brucite and the strong base is carried out at room temperature and thus an initial temperature (tᵢ) of about 26°C is observed in the medium before introducing CO₂, said medium reaching 37±1 °C until the complete or almost complete formation of said intermediate.

In an advantageous embodiment, the present invention relates to a process of preparation of magnesite and/or hydromagnesite, wherein the CO₂ source in the medium is at an initial pressure comprised from about 40 bar to about 60 bar, in particular 50bar, wherein said t₁ time is comprised from 23h to about 25h, in particular 24h, to obtain an intermediate comprising a dypingite precipitate in the medium, as defined above, comprising a further step of heating, after said t₁ time, at a temperature comprised from about 80°C to about 100°C, in particular 90°C, during a t₂ time comprised from about 1h to about 3h, in particular 2h to obtain an hydromagnesite precipitate.

The overall synthesis time of hydromagnesite is drastically reduced from 12 days to 5 hours when NaOH is used as catalyst and/or additive in the presence of Mg(OH)₂-H₂O-CO₂. Similar to magnesite synthesis, the NaOH-rich solution accelerates the brucite carbonation by a temporary increase of carbonate ion concentration.

In an advantageous embodiment, the present invention relates to one of the above process of preparation of hydromagnesite comprising the following steps:
a. contacting brucite and a CO₂ source in a medium having a pH higher than 13, in particular 13.5, and containing a base, in particular NaOH, at a temperature comprised from about 15°C to about 40°C, in particular from about 16°C to about 20°C, during a t₁ time comprised from 2h to about 4h, in particular 3h, to obtain an intermediate comprising a mixture of residual brucite and of hydrated Mg carbonate in the medium,
b. heating said medium containing the intermediate a mixture of residual brucite and of hydrated Mg carbonate, at a temperature comprised from about 80°C to about 100°C, in particular 90°C during a t₂ time comprised from about 20 to about 30 h, in particular 24h to obtain an hydromagnesite precipitate.

The global reaction for hydromagnesite precipitation, i.e. an intermediate hydroxylated (or basic) Mg-carbonate with respect to magnesite, can be written as follows:

*Mg*(*OH*)₂ + 0.8*Na*₂*CO*₃ + 0.8*H2O* → 0.2*Mg*₅(*CO*₃)₄(*OH*)₂.4*H*₂*O* + 1.6*NaOH* (5)

As above mentioned, this carbonation reaction of brucite takes only five hours.

Conversely, the hydrothermal carbonation of brucite in absence of NaOH takes about 12 days to obtain the hydromagnesite with similar textural properties.

The hydrothermal carbonation (90°C, 90 bar) of brucite in absence of NaOH forming the hydromagnesite can be illustrated by the following global reaction.

*Mg*(*OH*)₂ +0.8*CO*_{2(*aq*)} → 0.2*Mg*₅(*CO*₃)₄(*O*H)₂.4*H*₂*O* (6)

The use of NaOH as catalyst agent is a powerful option to accelerate the production of hydromagnesite (only five hours) with potential industrial applications because of its the interesting textural properties and composition reported in Table 2.

The purity of the obtained hydromagnesite is > 96% based on the thermogravimetric analysis (TGA)

On the other hand, the yield or efficiency is close to 1 (or 100%), based in the absence on brucite in the product.

In an advantageous embodiment, magnesite and/or hydromagnesite, and/or dypingite of the invention, with controlled morphology and particle size and moderate-to-high specific surface area, are used as mineral filler and pigment in paper, paint rubber and plastics as well as flame-retardant.

In particular, based on the composition and textural properties, the magnesite of the invention can be used as mineral filler in paper and pigments.

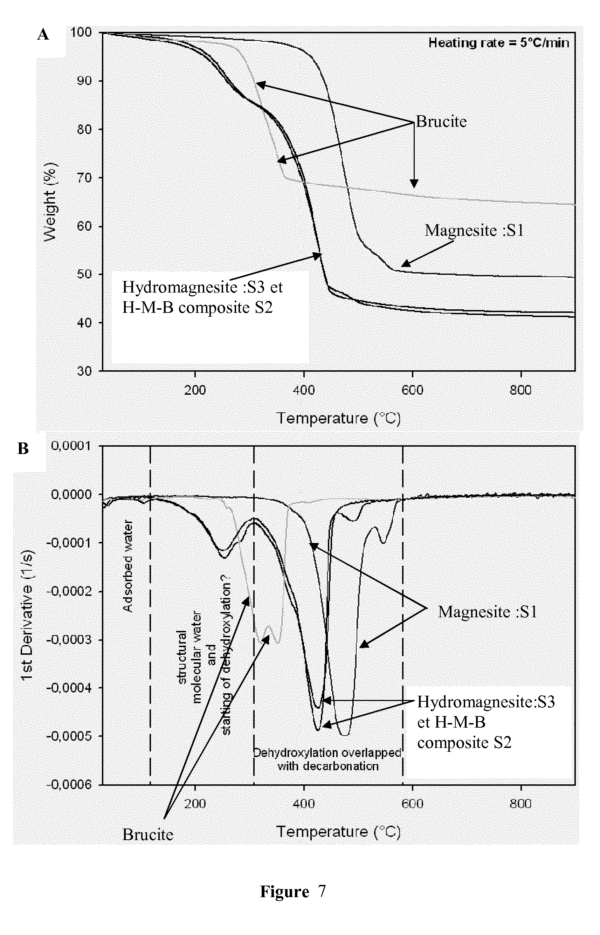

Hydromagnesite of the invention can be used as a flame-retardant in electric and electronic parts, constructional materials, etc., because their dehydration-dehydroxylation-decarbonation processes consume significant amount of energy in a broad interval of temperature (see Fig. 7).

Moreover, platy fine particles and moderate specific surface area (28 m²/g) for hydromagnesite can facilitate its dispersion/distribution when it is used as mineral filler or flame-retardant.

### DESCRIPTION OF THE FIGURES

Figure 1 presents the fast precipitation of magnesite from Mg(OH)₂-H₂O-CO₂ slurry enhanced by NaOH and a heat-ageing step from ambient temperature to 90°C. Only 48h were required to produced high-purity magnesite as attested from XRD pattern (ICDD # 086-2346). Precursor or basic Mg-carbonate was identified as dypingite from XRD pattern (ICDD # 023-1218). High-purity synthetic brucite was used as solid starting reactant as attested from XRD pattern (ICDD # 083-0114).
   x axis: 28 (degrees)
   y-axis: intensity (a.u.)
Figure 2A to 2D present FESEM images showing the morphology of dypingite precursor and magnesite crystals precipitated from Mg(OH)₂-H₂O-NaOH-CO₂ reaction medium at ambient temperature and after heat-ageing step at 90°C, respectively, at different magnifications.
Figures 2A and 2B: dypingite.
Figures 2C and 2D: magnesite.
**Figure 3** presents the XRD patterns showing the aqueous carbonation of brucite Mg(OH)₂ in presence and absence of NaOH. The sodium hydroxide played a catalytic role to precipitate the magnesite after only 48h of reaction.
   x axis: 28 (degrees).
   y-axis: intensity (a.u.).
   H: hydromagnesite.
   B: brucite.
   M: magnesite.

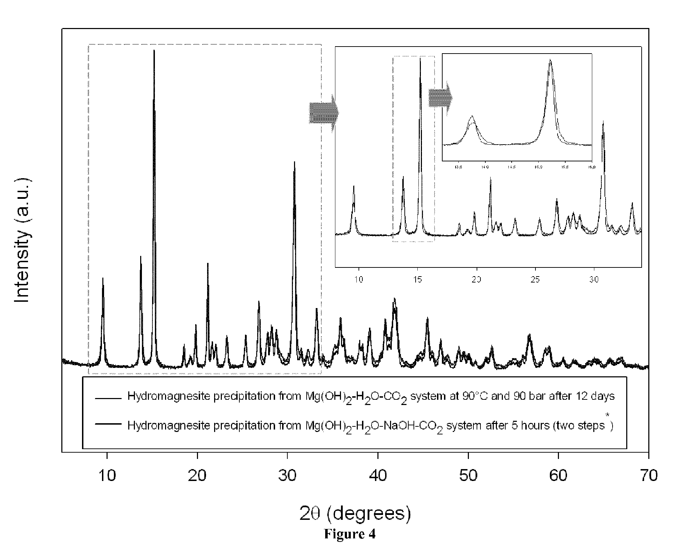

**Figure 4** presents the experimental XRD patterns corresponding to hydromagnesite (ICDD # 070-0361) synthesized from Mg(OH)₂-H₂O-CO₂ in the reaction medium in absence and in presence of NaOH, S2 and S5 syntheses in tables 1 and 2, respectively.
   *: (1) carbonation of brucite without external heating for 3h followed by (2) heat-ageing step from 38°C to 90°C for 2h.

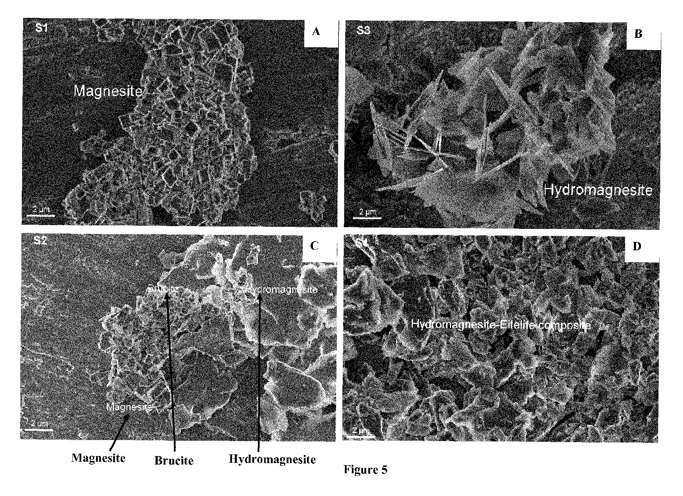

**Figure 5A to 5D** present the FESEM images showing the morphology of magnesite (S1, figure 5A), hydromagnesite (S3, figure 5B), hydromagnesite-magnesite-brucite composite (S2, figure 5C) and hydromagnesite-eitelite composite (S4, figure 5D) precipitated from Mg(OH)₂-H₂O-CO₂ in presence/absence of NaOH. Specific experimental conditions for these syntheses are reported in Table 1.

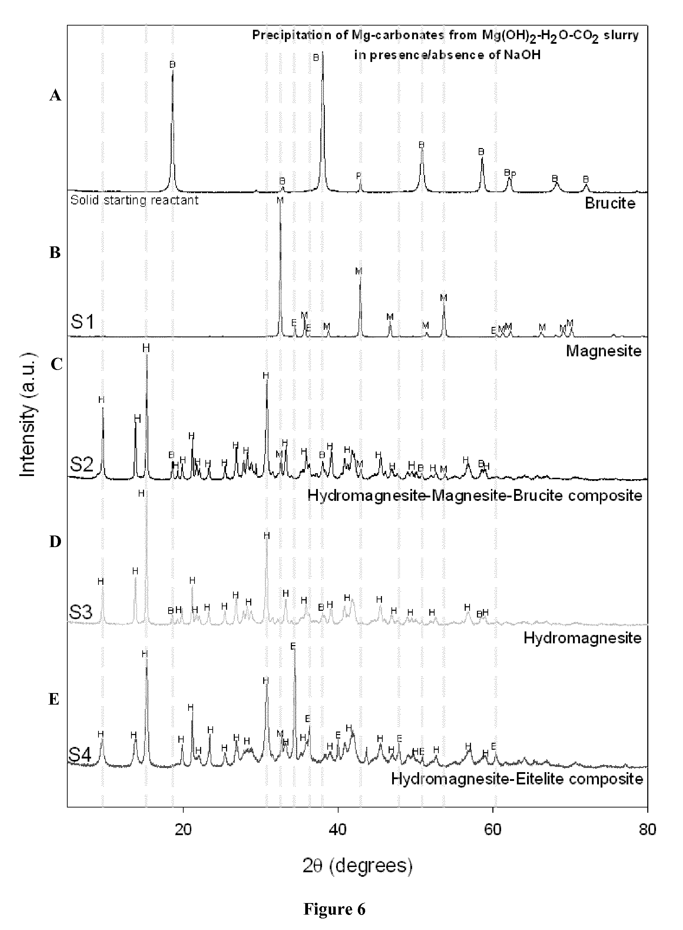

**Figure 6A to 6E** present the characterization by X-ray diffraction on solid starting reactant (brucite, figure 6A) and recovered solid products after brucite carbonation in presence or absence of NaOH (syntheses: S1 (figure 6B), S2 (figure 6C), S3 (figure 6D) and S4 (figure 6E)). Experimental XRD patterns matching to magnesite (M: ICDD # 086-2346), hydromagnesite (H: ICDD # 070-0361), eitelite (E: ICDD # 024-1227) and brucite (B: # 044-1482).
   x axis: 2θ (degrees)
   y-axis: intensity (a.u.)
**Figure 7A and 7B** present the thermogravimetric analyses (TGA on top graph (figure 7A) and differential TGA on bottom graph (figure 7B) on the synthesized magnesite (S1), hydromagnesite (S3), Hydromagnesite-magnesite-brucite composite (S2).
   Figure 7A: x-axis: weight (%) and y-axis: temperature (°C)
   Figure 7B: x-axis: first derivative (1/s) and y-axis: temperature (°C).
   Figure 7B is separated in columns from left to right with dashed lines:
   - first column: adsorbed water,
   - second column: structural molecular and starting of dehydroxylation?,
   - third column: dehydroxylation overlapped with decarbonation.

### EXAMPLES

The main experimental conditions to synthesize magnesite, hydromagnesite and Mg-carbonate composites are summarized in Table 1 and the experimental procedures are described in detail in following sub-sections.

### Example 1: Synthesis of magnesite (MgCO₃)

One liter of high-purity water with electrical resistivity of 18.2 MΩ·cm, 2 mol of NaOH and 1 mol of synthetic brucite (Mg(OH)₂ (with chemical purity>95%) were placed in a titanium reactor (autoclave with internal volume of two liters). This reactive suspension was immediately stirred using constant mechanical agitation (400 rpm) during the reaction. The temperature of suspension increased instantaneously up to 26°C due to exothermic dissolution of NaOH in the reaction medium. At this reference temperature, 50 bar of CO₂ (≈2 mol) were immediately injected in the reaction medium. The carbonation reaction started instantaneously as attested by a continuous consumption of CO₂ (monitored by a pressure drop in the reaction medium) and by an increase of temperature during exothermic carbonation reaction (maximum of temperature≈38°C after 1h of reaction (ΔT≈12°C).

After 24h of carbonation reaction at ambient (or room) temperature (16-20 °C) (including exothermic period), a heat-ageing step was performed from ambient temperature to 90°C for additional 24h. Based on the several preliminary experiments, we observed that the NaOH played a catalytic role, i.e. it accelerated the brucite carbonation by a temporary increase of carbonate ion concentration and it favoured the magnesite formation during the heat-ageing step.

At the end of the experiment, the autoclave was removed from heating and immersed into cold water. The residual CO₂ was degassed from reactor during water-cooling period. After water cooling at 30°C (about 15 minutes) the autoclave was disassembled, and the solid product was carefully recovered and separated by centrifugation (30 minutes at 12,000 rpm), decanting the supernatant solutions. The solid product was washed twice by re-dispersion/centrifugation processes in order to remove the soluble sodium carbonates formed during the synthesis. Finally, the solid product was dried directly in the centrifugation flasks at 80°C for 48 h. The dry solid product was manually recovered, weighed and stored in plastic flasks for further characterizations (FESEM, XRD, TGA and N₂ sorption isotherms).

### Example 2: Synthesis of hydromagnesite (Mg₅(CO₃)₄(OH)₂.4H₂O)

Two methods are reported:
(i) Precipitation of hydromagnesite from Mg(OH)₂-H₂O-CO₂ slurry. One liter of high-purity water with electrical resistivity of 18.2 MΩ·cm and 1 mol of synthetic brucite (Mg(OH)₂ with chemical purity>95%) were placed in a titanium reactor (autoclave with internal volume of two litres). This reactive suspension was immediately stirred at 400 rpm and heated to 90°C. When the temperature was stabilized, 50 bar of CO₂ were injected and the total pressure in the reaction medium was immediately increased from 50 to 90 bar by argon injection.
   At these T and P conditions, the vapor phase primarily consists of an Ar + CO₂ mixture, with CO₂ in a supercritical state. The reaction time in this triphasic solid-liquid-gas experiment (Mg(OH)₂-H₂O-CO₂ slurry) was typically 12 days in order to obtain high-purity hydromagnesite. The recovery/drying procedures of solid product were similar as described above for the synthesis of magnesite.
(ii) Knowing the catalytic action of NaOH on the brucite carbonation, a more rapid method was implemented to synthesize the hydromagnesite. This simple method required only five hours of carbonation reaction. In fact, this method is very similar to the synthesis method for magnesite (see above) except to the performed reaction time in each step of carbonation. 3h for carbonation at ambient temperature (including exothermic period).
   and 2h for heat-ageing step at 90°C were only required to obtain high-purity hydromagnesite. The recovery/drying procedures of solid product were the same as described above for magnesite synthesis.

### Example 3: Synthesis of Mg-carbonate composites

Hydromagnesite-magnesite-brucite composite. This composite material was synthesized by a simple modification on the synthesis method for magnesite (see above). More specifically, the carbonation reaction of brucite was carried out in absence of NaOH, leading to the formation of hydromagnesite (dominant phase) and magnesite (minor phase).

The final pH is equal to 8.4, measured ex-situ at about 20°C

These formed Mg carbonates were intimately dispersed with residual (or un-reacted) brucite forming a so-called hydromagnesite-magnesite-brucite composite. The recovery/drying procedures of solid product were similar to what is described above for the synthesis of magnesite. Underlining that washing procedure of solid product to remove soluble Na carbonate was not necessary for this synthesis.

Hydromagnesite-eitelite composite. This composite material was synthesized by simple operating modifications on the synthesis method for magnesite (see above). Herein, a heat-ageing step at 45°C was performed immediately after CO₂ injection into the reaction medium.

The final pH is equal to 8.4, measured ex-situ at about 20°C

The reaction time with Mg(OH)₂-H₂O-NaOH-CO₂ was typically 10 days in order to obtain binary hydromagnesite-eitelite composite. In this particular case, it is noted that the sodium initially contained in NaOH reacts significantly to lead eitelite mineral (Na₂CO₃.MgCO₃). Then, for this case, the NaOH had not only a catalytic affect. The recovery/drying procedures of solid product were the same as described above for magnesite synthesis.

### Example 4: Characterization of solid products

*FESEM observations:* magnesite, hydromagnesite and various Mg-carbonate composites from syntheses were dispersed by ultrasonic treatment in absolute ethanol for five to ten minutes. One or two drops of suspension were then deposited directly on an aluminium support for SEM observations, and coated with platinum. Morphological observations of various selected powders were performed using a Zeiss Ultra 55 field emission gun scanning electron microscope (FESEM) that has a maximum spatial resolution of approximately 1nm at 15kV.

*XRD measurements:* X-Ray Powder Diffraction (XRD) analyses were performed using a D5000, SIEMENS diffractometer in Bragg-Brentano geometry; equipped with a goniometer theta-theta with a rotating sample holder. The XRD patterns were collected using Cu kα₁ (λ_{kα1}=1.5406Ǻ) and kα₂ (λ_{kα2}=1.5444 Ǻ) radiation in the range 2θ = 10 - 70° with a step size of 0.04° and a counting time of 6 seconds per step.

*Thermogravimetric analyses:* TGA for all Mg-carbonate samples were performed with a TGA/SDTA 851^{e} Mettler Toledo instrument under the following conditions: sample mass of about 10 mg, alumina crucible of 150 µl with a pinhole, heating rate of 5 °C min⁻¹, and inert N₂ atmosphere of 50 ml min⁻¹. Sample mass loss and associated thermal effects were obtained by TGA/SDTA. In order to identify the different mass loss steps, the TGA first derivative (rate of mass loss) was used. TGA apparatus was calibrated in terms of mass and temperature. Calcium oxalate was used for the sample mass calibration. The melting points of three compounds (indium, aluminum and copper) obtained from the DTA signals were used for the sample temperature calibration.

*N₂ sorption isotherms:* N₂ sorption isotherms for magnesite, hydromagnesite and Mg-carbonate composites were performed by using a sorptomatic™ apparatus (Thermo Electron Corporation). The specific surface area of powdered samples was estimated by applying the Brunauer-Emmet-Teller (BET) equation in the 0.05≤P/P₀≤0.35 interval of relative pressure and by using 16.2 Å² for cross-sectional area of molecular N₂. A non-linear regression by the least-squares method was performed to fit the interval data *(n_{ads} vs. P*/*P₀)* in the experimental isotherms.

**Table 1. Summary of experimental conditions for synthesis of anhydrous and hydroxylated Mg-carbonates.**

| Exp. Label | Reaction medium | Use of NaOH | Tᵢ (°C) | Pᵢ (bar) | Heat-ageing step | tᵣ | Isobaric/ Anisobaric | Mineral |
|---|---|---|---|---|---|---|---|---|
| S0 | Mg(OH)₂-H₂O-CO₂ | Yes | RT (∼26*) | 50 | not | 24 hours | Anisobaric | Dypingite |
| S1 | Mg(OH)₂-H₂O-CO₂ | Yes | RT (∼26*) | 50 | From 20 to 90 °C | 48 hours | Anisobaric | Magnesite |
| S2 | Mg(OH)₂-H₂O-CO₂ | Not | RT (∼20) | 50 | From 20 to 90 °C | 48 hours | Anisobaric | H-M-B composite |
| S3 | Mg(OH)₂-H₂O-CO₂ | Not | 90 | 50 | not | 12 days | Isobaric** | Hydromagnesite |
| S4 | Mg(OH)₂-H₂O-CO₂ | Yes | RT (∼26* ) | 50 | From 26 to 45 °C | 10 days | Anisobaric | H-E composite |
| S5 | Mg(OH)₂-H₂O-CO₂ | Yes | RT (∼26*) | 50 | From 3 8 to 90 °C | 5 hours | Anisobaric | Hydromagnesite |

| | | | | | | | | |
|---|---|---|---|---|---|---|---|---|
| Tᵢ: Temperature at witch the CO₂ gas was injected; Pᵢ: Initial CO₂ pressure in the reaction medium; tᵣ: total reaction time (including heat-ageing step); RT: room temperature *: Temperature of suspension (including exothermic dissolution of NaOH in water); **: synthesis at constant gas (CO₂+Ar) pressure (90 bar), the consumption of CO₂ was regulated by automatic argon injection; H: Hydromagnesite; M: Magnesite; B: Brucite; E: Eitelite. | | | | | | | | |

**Table 2. Mineral composition, morphology and specific surface area (S_{BET}) for synthesized Mg-carbonates deduced from XRD, TGA, FESEM and N₂ adsorption isotherms.**

| Exp. Label | Main Mineral(s) | Formula | Minor mineral(s) (<5%) | Morphology | S_{BET} (m²/g) |
|---|---|---|---|---|---|
| S0 | Dypingite | Mg₅(CO₃)₄(OH)₂. 5H₂O | Eitelite | Platy-compacted aggregates | 9 |
| S1 | Magnesite | MgCO₃ | Eitelite + hydromagnesite | Rhombohedral crystals | 3 |
| S2 | Hydromagnesite Magnesite Brucite | Mg₅(CO₃)₄(OH)₂. 4H₂O MgCO₃ Mg(OH)₂ | Not detected | Platy-compacted aggregates Rhombohedral crystals Hexagonal crystals | 6 |
| S3 | Hydromagnesite | Mg₅(CO₃)₄(OH)₂. 4H₂O | Brucite | Platy fine particles | 23 |
| S4 | Hydromagnesite Eitelite | Mg₅(CO₃)₄(OH)₂. 4H₂O Na₂CO₃.MgCO₃ | Brucite | Irregular aggregation | 11 |
| S5 | Hydromagnesite | Mg₅(CO₃)₄(OH)₂. 4H₂O | Brucite | Platy fine particles | 28 |

## Claims

1. Use of brucite and a CO₂ source in a medium having a pH higher than 13, in particular 13.5, and containing a strong base, at a temperature comprised from about 15°C to about 40°C, in particular from about 16°C to about 20°C, during a t₁ time comprised from about 2h to about 25h, for the preparation of magnesite and/or hydromagnesite.

2. Use according to claim 1, wherein said base is selected from the group consisting in NaOH, KOH, LiOH and RbOH, preferentially NaOH, preferably at a molar ratio NaOH/brucite comprised from 1 to 3, in particular 2.

3. Use according to claim 1 or 2, wherein the CO₂ source in the medium is at a initial pressure comprised from about 40bar to about 60bar, in particular 50bar.

4. Use according to anyone of claims 1 to 3, wherein said t₁ time is comprised from 23h to about 25h, in particular 24h, enabling the formation of an intermediate comprising a dypingite precipitate in the medium.

5. Use according to claim 4, wherein said medium containing the dypingite is further heated, after said t₁ time, at a temperature comprised from about 80°C to about 100°C, in particular 90°C during a t₂ time comprised from about 20 to about 30 h, in particular 24h, for the preparation of magnesite, comprising less than 2% of eitelite.

6. Use according to anyone of claims 1 to 3, wherein said t₁ time is comprised from 2h to about 4h, in particular 3h, enabling the formation of an intermediate comprising a mixture of residual brucite and of hydrated Mg carbonate in the medium.

7. Use according to claim 6, wherein said medium is further heated, after said t₁ time, at a temperature comprised from about 80°C to about 100°C, in particular 90°C during a t₂ time comprised from about 1 to about 3h, in particular 2h, for the preparation of hydromagnesite, comprising less than 2% ofbrucite.

8. Process of preparation of magnesite and/or hydromagnesite comprising a step of contacting brucite and a CO₂ source in a medium having a pH higher than 13, in particular 13.5, and containing a strong base, at a temperature comprised from about 15°C to about 40°C, in particular from about 16°C to about 20°C, during a t₁ time comprised from about 2h to about 25h.

9. Process of preparation of magnesite and/or hydromagnesite according to claim 8, wherein said base is NaOH, preferably at a molar ratio NaOH/brucite comprised from 1 to 3, in particular 2.

10. Process of preparation of magnesite and/or hydromagnesite according to claim 8 or 9, wherein the CO₂ source in the medium is at an initial pressure comprised from about 40 bar to about 60 bar, in particular 50 bar.

11. Process of preparation of magnesite and/or hydromagnesite according to anyone of claims 8 to 10, wherein said t₁ time is comprised from 23h to about 25h, in particular 24h, to obtain an intermediate comprising a dypingite precipitate in the medium.

12. Process of preparation of magnesite and/or hydromagnesite according to claim 11, comprising a further step of heating the medium containing the dypingite, after said t₁ time, at a temperature comprised from about 80°C to about 100°C, in particular 90°C, during a t₂ time comprised from about 20 to about 30 h, in particular 24h, to obtain magnesite..

13. Process of preparation of magnesite according to anyone of claim 8 to 12, comprising the following steps:
a. contacting brucite and a CO₂ source in a medium having a pH higher than 13, in particular 13.5, and containing a strong base, in particular NaOH, at a temperature comprised from about 15°C to about 40°C, in particular from about 16°C to about 20°C, during a t₁ time comprised from 23h to about 25h, in particular 24h, to obtain an intermediate comprising a dypingite precipitate in the medium,
b. optionally filtration of the medium containing the dypingite precipitate to obtain an isolated dypingite precipitate,
c. heating said medium containing the dypingite precipitate, or said isolated dypingite precipitate after introducing it in a medium having a pH higher than 13, in particular 13.5, and containing a base, at a temperature comprised from about 80°C to about 100°C, in particular 90°C during a t₂ time comprised from about 20 to about 30 h, in particular 24h to obtain a magnesite precipitate.

14. Process of preparation of magnesite and/or hydromagnesite according to anyone of claims 8 to 10, wherein said t₁ time is comprised from 2h to about 4h, in particular 3h, to obtain an intermediate comprising a mixture of residual brucite and of hydrated Mg carbonate in the medium.

15. Process of preparation of magnesite and/or hydromagnesite according to claim 14, comprising a further step of heating, after said t₁ time, at a temperature comprised from about 80°C to about 100°C, in particular 90°C, during a t₂ time comprised from about 1h to about 3h, in particular 2h, to obtain an hydromagnesite precipitate.

16. Process of preparation of hydromagnesite according to anyone of claim 14 or 15, comprising the following steps:
a. contacting brucite and a CO₂ source in a medium having a pH higher than 13, in particular 13.5, and containing a base, in particular NaOH, at a temperature comprised from about 15°C to about 40°C, in particular from about 16°C to about 20°C, during a t₁ time comprised from 2h to about 4h, in particular 3h, to obtain an intermediate comprising a mixture of residual brucite and of hydrated Mg carbonate in the medium,
b. heating said medium containing the intermediate comprising the mixture of residual brucite and a hydrated Mg carbonate as intermediate, at a temperature comprised from about 80°C to about 100°C, in particular 90°C during a t₂ time comprised from about 20 to about 30 h, in particular 24h to obtain an hydromagnesite precipitate.
